# EUROPEAN PATENT SPECIFICATION

(11) **EP 4 075 410 B1**
(45) Date of publication and mention of the grant of the patent: **07.01.2026**
(21) Application number: 22167826.1
(22) Date of filing: 12.04.2022
(51) Int. Cl.: G09B 9/08

(54) **AUTOMATIC INFERENTIAL PILOT COMPETENCY ANALYSIS BASED ON DETECTING PERFORMANCE NORMS IN FLIGHT SIMULATION DATA**
AUTOMATISCHE INFERENTIELLE ANALYSE DER PILOTENKOMPETENZEN BASIEREND AUF DEM DETEKTIEREN VON LEISTUNGSNORMEN IN FLUGSIMULATIONSDATEN
ANALYSE AUTOMATIQUE INFÉRENTIELLE DES COMPÉTENCES DES PILOTES BASÉE SUR LA DÉTECTION DES NORMES DE PERFORMANCE DANS LES DONNÉES DE SIMULATION DE VOL

(30) Priority: 16.04.2021 US 202117232931
(43) Date of publication of application: 19.10.2022
(73) Proprietor: PACE CANADA AEROSPACE & IT INC., Montreal QC H3B 4N8 (CA)
(72) Inventor: KLASSEN, Mikhail, Lethbridge (CA); SPIRA, Daniel, Beaconsfield (CA); MAXWELL, Aaron, Toronto (CA); ALVES, José Miguel, Etobicoke (CA); ABOU-KHALIL, Karim, Montreal (CA)
(74) Representative: Botti & Ferrari S.p.A.

(56) References cited:
- US-A1- 2015 079 545
- SOCHA V ET AL: "Automatic Detection of Flight Maneuvers with the Use of Density-based Clustering Algorithm", 2018 XIII INTERNATIONAL SCIENTIFIC CONFERENCE - NEW TRENDS IN AVIATION DEVELOPMENT (NTAD), IEEE, 30 August 2018 (2018-08-30), pages 132 - 136, XP033458388, DOI: 10.1109/NTAD.2018.8551680

## Description

### COPYRIGHT NOTICE

### TECHNICAL FIELD

One technical field of the present disclosure is computer-aided automatic analysis of aircraft pilot competency and flight proficiency based on flight simulation data. Another technical field is machine learning and artificial intelligence.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Today's pilot training programs tend to be expensive in terms of both labor and equipment, complicated, and take too long to complete. Typical pilot training programs require significant input from flight instructors to guide, monitor, and evaluate pilot trainees during tens or hundreds of flight sessions. Such pilot programs are often focused on subjective analysis and manual observations that are made by the flight instructors. In other words, such pilot programs lack the use of objective metrics and evidence-based processes for the pilot training processes.

Furthermore, most pilot training programs are outdated and do not take advantage of the recent technological advancements of other industries such as automated data collection, machine learning, and artificial intelligence. Thus, there is a need for a system capable of executing a data-driven approach in conjunction with machine learning and artificial intelligence to make objective assessments of a pilot's proficiency in flight maneuvers and competency of aviation disciplines. At the same time, the use of machine analysis of flight simulator data cannot introduce delays into the assessment process; real-time response is a requirement and may be difficult to achieve given the large amounts of data that flight simulators are capable of outputting continuously as a pilot conducts a flight simulation.
A known flight training system that seeks to measure pilot performance in a simulated flight is described for instance in US Patent Publication No. US 2015/079545 A1 to Kurtz, 19 March 2015. Moreover, a method for automatically detecting flight maneuvers from flight simulator data is disclosed in the article of Socha et al. entitled "Automatic Detection of Flight Maneuvers with the Use of Density-based Clustering Algorithm" XIII INTERNATIONAL SCIENTIFIC CONFERENCE - NEW TREND IN AVIATIO DEVELOPMENT (NTDA), 30 August 2018.

### SUMMARY

The appended claims may serve as a summary of the invention.

### BRIEF DESCRIPTION OF THE DRAWINGS

In the drawings:
FIG. 1 illustrates a distributed computer system showing the context of use and principal functional elements with which one embodiment could be implemented.
FIG. 2 illustrates one embodiment of an algorithm that can be programmed to implement the disclosure.
FIG. 3 illustrates one embodiment of an algorithm that can be programmed to implement the disclosure.
FIG. 4 illustrates a computer system with which one embodiment could be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

The text of this disclosure, in combination with the drawing figures, is intended to state in prose the algorithms that are necessary to program a computer to implement the claimed inventions, at the same level of detail that is used by people of skill in the arts to which this disclosure pertains to communicate with one another concerning functions to be programmed, inputs, transformations, outputs and other aspects of programming. That is, the level of detail set forth in this disclosure is the same level of detail that persons of skill in the art normally use to communicate with one another to express algorithms to be programmed or the structure and function of programs to implement the inventions claimed herein.

Embodiments are described in sections below according to the following outline:
1. General Overview
2. Structural & Functional Overview
3. Functional Overview
4. Implementation Example - Hardware Overview

### 1. GENERAL OVERVIEW

Embodiments of this disclosure use a data-driven approach in conjunction with machine learning and artificial intelligence to make automated, computer-aided objective assessments of a pilot's proficiency in flight maneuvers and competency of aviation disciplines. Embodiments are programmed to track many variables simultaneously, monitor actions that are difficult for the instructor to see, e.g., rudder pedals, maintain vigilance when the instructor may be looking away from the pilots, e.g., while taking notes, and generate assessments more efficiently and in real-time in response to input data from a flight simulator. Embodiments offer technical benefits such as reduced time to execute assessments and therefore reduced time for training.

In one embodiment, an adaptive training server receives, from a separate flight simulator computer, flight simulation data corresponding to a simulated flight session that a pilot conducts using a flight simulation training device communicatively coupled to the flight simulator computer. For the sake of brevity, this disclosure may use the term "flight simulator computer" to collectively refer to both the flight simulator computer and the flight simulation training device, unless noted otherwise. Based on the flight simulation data, the adaptive training server identifies a plurality of flight maneuvers that the pilot performed in simulation during the simulated flight session. Flight maneuvers are identified using a machine learning time-series classifier that has been trained to identify a plurality of maneuvers from the session data and to partition the session data into a plurality of segments, each segment corresponding to one of a plurality of maneuvers identified from the session data. The adaptive training server then identifies and generates as output a plurality of performance metrics that are associated with a pilot's proficiency of the identified maneuvers. In some embodiments, the adaptive training server may also determine a score for each of the assessed maneuvers.

The term "flight maneuvers" used herein include any of aircraft maneuvers performed on ground or during flight, including execution of any procedures performed by a pilot during a flight session, including abnormal or emergency procedures. Examples of the maneuvers include one or more of: takeoff, landing, climb, cruise, steep turn, approach, or landing. Other embodiments may be programmed to recognize or classify other maneuvers, using different or additional flight simulation data. Unless noted otherwise, the terms "session data," "flight simulation data," or "flight simulator data" all refer to information and data associated with a simulated flight session and theses terms may be used interchangeably. In some embodiments, the flight simulation data may include data obtained from actual, non-simulated flight sessions.

In one aspect of the embodiment, the flight simulation data may include values of flight variables, or metadata for flight variables, such as: airspeed, altitude, heading, rate of climb, rate of descent, bank angle, pitch, roll, yaw, application of propulsion system thrust, application of propulsion system power, application of brakes, application of landing gear, application of one or more control surfaces, application of one or more flight control inceptors, application of one or more of flight control devices, aircraft malfunctions, or external environmental conditions. In an embodiment, control surfaces include one or more of flaps, spoilers, ailerons, slats, rudder(s), elevator(s), or trimmable horizontal stabilizers, and direction or identifying data for such control surfaces. In an embodiments, flight control inceptors include one or more of control column, wheel, yaw pedals, tiller, cyclic stick, collective lever, or side stick, and indications and displays visible in the cockpit. In an embodiment, flight control devices include one or more of switches, buttons, knobs, dials, levers, and handles used during aircraft operation.

In one embodiment, the adaptive training server is programmed to evaluate the performance metrics based on evaluation criteria specified by abnormal detection data. In one embodiment, the adaptive training server is programmed to generate the abnormal detection data based on a machine learning algorithm that has been trained to determine the evaluation criteria based on labeled historical flight simulator data that has been obtained from a large number of prior flight simulation sessions of the same pilot or different pilots.

In another embodiment, the adaptive training server may be programmed to use the same performance metrics, obtained via evaluation, to assesses one or more specified core competencies. In an embodiment, the adaptive training server may be programmed to map each of the performance metrics that have been evaluated for the maneuvers to one or more core competencies and may be programmed to automatically assess the core competencies using the performance metrics. The adaptive training server also may be programmed to determine a score for each of the competencies.

In one aspect of the embodiment, the adaptive training server is programmed to determine the core competencies based on one or more flight simulation demonstrations of: an ability to identify and apply procedures in accordance with operating instructions and applicable regulations; having sufficient knowledge to execute flight maneuvers; effective oral, non-verbal and written communications; an ability to control an aircraft flight path, or trajectory, through automation; an ability to control an aircraft flight path, or trajectory, through manual control; effective leadership and team working; an ability to accurately identify risks and resolve problems, using decision-making processes; an ability to perceive and comprehend relevant information and to anticipate potential issues; and effective resource management and prioritization of tasks.

### 2. STRUCTURAL & FUNCTIONAL OVERVIEW

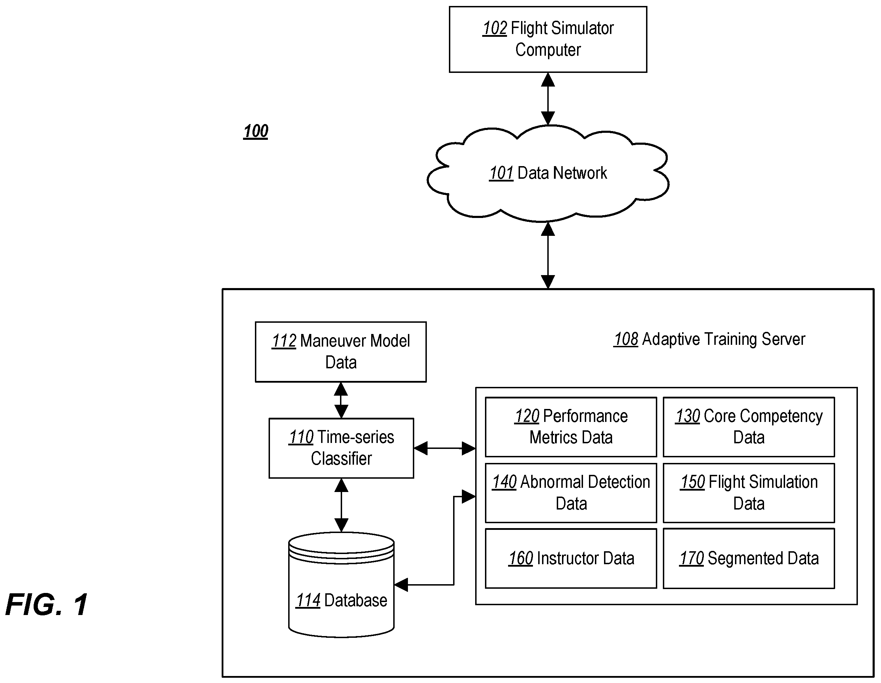

FIG. 1 illustrates a distributed computer system showing the context of use and principal functional elements with which one embodiment could be implemented.

In an embodiment, a computer system 100 comprises components that are implemented at least partially by hardware at one or more computing devices, such as one or more hardware processors executing stored program instructions stored in one or more memories for performing the functions that are described herein. In other words, all functions described herein are intended to indicate operations that are performed using programming in a special-purpose computer or general-purpose computer, in various embodiments. FIG. 1 illustrates only one of many possible arrangements of components configured to execute the programming described herein. Other arrangements may include fewer or different components, and the division of work between the components may vary depending on the arrangement.

FIG. 1, and the other drawing figures and all of the description and claims in this disclosure, are intended to present, disclose and claim a technical system and technical methods in which specially programmed computers, using a special-purpose distributed computer system design, execute functions that have not been available before to provide a practical application of computing technology to the problem of using machine learning approaches to improve aviation training processes. In this manner, the disclosure presents a technical solution to a technical problem, and any interpretation of the disclosure or claims to cover any judicial exception to patent eligibility, such as an abstract idea, mental process, method of organizing human activity or mathematical algorithm, has no support in this disclosure and is erroneous.

In an embodiment, computer system 100 comprises a data network 101 that is communicatively coupled to a flight simulator computer 102 and an adaptive training server 108. For purposes of illustrating a clear example, FIG. 1 shows one instance of each of the foregoing functional units, but in other embodiments, one or more of the functional units may be implemented with two or more units.

The data network 101 broadly represents one or more local area networks, wide area networks, internetworks, or a combination thereof, which are communicatively coupled via any of wired or wireless, terrestrial, or satellite network links.

The flight simulator computer 102 and adaptive training server 108 may be implemented using one or more server-class computers, clusters, virtual machines, or other computing devices. For example, adaptive training server 108 may be implemented using a fault-tolerant, scalable set of virtual computing instances in a private datacenter, public datacenter or cloud computing facility with a number of central processing units sufficient to communicate with the flight simulator computer 102 through the data network 101.

In an embodiment, the flight simulator computer 102 represents a workstation, mobile computing device, smartphone, laptop computer, or desktop computer that is associated with a flight simulation environment. In some embodiments, the flight simulator computer 102 is programmed with an operating system having an internet software stack that can communicate with the data network 101 using protocols such as HTTP over TCP/IP, and has a connection to the internet that can be used to communicate with the adaptive training server 108 using HTTP, application protocols implemented using apps on the flight simulator computer 102, or other techniques. The flight simulator computer 102 may be one source of introducing flight simulation data into the processes described herein, but other embodiments may the flight simulation data and other types of data appropriate for pilot training through programmatic calls or other systems or computers.

Typically, flight simulator computer 102 is provided by a manufacturer, entity or party independent of the one that makes or supplies the adaptive training server 108, and embodiments specifically contemplate programming the adaptive training server to interoperate with a variety of different flight simulator computers using programmatic data interfaces to obtain data that the flight simulator computers output.

In an embodiment, the flight simulator computer 102 is programmed to collect flight simulation data from a flight session involving, for example, a trainee pilot and optionally an instructor. In an embodiment, the flight simulator computer 102 collects the flight simulation data 150 from controller devices, sensors, and/or flight simulation software associated with a flight simulation environment. In some embodiments, the flight simulator computer 102 collects instructor data 160 that relates to instructor-provided comments, evaluations, scorings, or information associated with unanticipated conditions injected into a flight session by an instructor. The instructor data may be packaged separately from, or as part of, the flight simulation data 150.

The flight simulation data 150 may be transmitted to the adaptive training server 108, or obtained by it, in real time through the data network 101. Real time, in this context, means that data flows from the flight simulator computer 102 to the adaptive training server 108 as a flight simulation session progresses, continuously. Alternatively, the flight simulation data 150 may be stored and forwarded or transmitted to the adaptive training server 108 after the flight session completes or otherwise terminates. Adaptive training server 108 may obtain flight simulation data 150 by polling the flight simulator computer 102, using programmatic calls via an API that the flight simulator computer 102 defines, by subscribing to a protocol that the flight simulator computer defines, or other means. The specific mechanism of moving data from the flight simulator computer 102 to the adaptive training server 108 is not critical provided that it is automatic, programmatic, and does not introduce significant latency.

In an embodiment, the adaptive training server 108 represents one or more server computers and/or virtual machine instances that are programmed to implement the functions that are further described herein. In one embodiment, the adaptive training server 108 may be architected with load balancing routers, multiple processors, clusters, or virtual machine instances, work queues, multithreaded programming, and parallel processing to service and communicate with the flight simulator computer 102 through the data network 101.

In an embodiment, the adaptive training server 108 is programmed to receive flight simulation data 150 through the data network 101 and store the flight simulation data 150 in a digital storage device or database 114. In an embodiment, the database 114 is programmed with a database schema or other form of organized, high-speed, digital storage and manages performance metrics data 120, core competency data 130, abnormal detection data 140, time-series classifier 110, and maneuver model data 112. Database 114 may represent any digital data storage device or repository including combinations of database clusters, relational databases, non-relational databases, object storage or other repositories.

In embodiment, the time-series classifier 110 comprises a set of stored program instructions that are programmed as a set of clusters, each of which has a corresponding machine-learned model stored in maneuver model data 112. Each model is trained to recognize, based on flight simulation data 150, one or more maneuvers performed during a flight session, including certain procedures executed by a pilot. A procedure that a model is trained to recognize may not necessarily be an aircraft maneuver, but rather, a set of protocols or procedures executed by the pilot. Examples of the flight maneuvers that the time-series classifier 110 is programmed to recognize include taxi, takeoff, departure, transition, climb, cruise, descent, arrival, approach, go-around, missed approach, landing, circuit, steep turn, recovery from stall, recovery from unusual attitude, upset recovery, and autorotation. In addition to these examples, in some embodiments, the machine-learned models may be trained to recognize "conditional maneuvers" or "non-normal procedures" that are performed/executed in response to emergency, unanticipated, or abnormal conditions experienced during a flight session (e.g., engine failure, change in weather, etc.). In some embodiments, such conditions may be automatically injected into the flight session by the flight simulator computer 102, or alternatively, introduced into the flight session manually by an instructor or pilot. For example, during a takeoff maneuver, the flight simulator computer 102 may be programmed to inject into the flight session a scenario where the aircraft encounters a simulated engine failure. In response, the pilot may need to perform a conditional maneuver referred to as the "rejected takeoff" to abort the takeoff maneuver. As another example, the flight simulator computer 102 may be programmed to inject into the flight session a scenario where the aircraft encounters a simulated aircraft pressurization system failure. In response, the pilot may need to perform a non-normal procedure referred to as the "emergency descent" to maintain safety of flight.

In an embodiment, the time-series classifier 110 is trained to automatically recognize conditional maneuvers or non-normal procedures based on the flight simulation data 150 which may indicate a change in flight variables such as airspeed, altitude, heading, rate of climb, rate of descent, bank angle, pitch, roll, yaw, application of propulsion system thrust, application of propulsion system power, application of brakes, application of landing gear, application of one or more control surfaces, application of one or more flight control inceptors, application of one or more of flight control devices, aircraft malfunctions, or external environmental conditions. In an embodiment, control surfaces include one or more of flaps, spoilers, ailerons, slats, rudder(s), elevator(s), or trimmable horizontal stabilizers, and direction or identifying data for such control surfaces. In an embodiments, flight control inceptors include one or more of control column, wheel, yaw pedals, tiller, cyclic stick, collective lever, or side stick, and indications and displays visible in the cockpit. In an embodiment, flight control devices include one or more of switches, buttons, knobs, dials, levers, and handles used during aircraft operation.

In some embodiments, the flight simulator data may simply indicate that emergency, unanticipated, or abnormal conditions have been introduced into a flight session, allowing the flight simulator computer 102 to recognize that a conditional maneuver or a non-normal procedure is being performed, or needs to be performed, by reading the flight simulator data.

In an embodiment, the time-series classifier 110 is programmed to execute a machine learning algorithm to recognize and classify segments of flight simulation data 150 into one of a finite number of classes (e.g., maneuvers). An example machine learning algorithm used by the time-series classifier 110 is a recurrent neural network programmed as a Bi-LSTM network.

Models associated with the time-series classifier 110 are trained using supervised machine learning approaches, for example, based on flight simulator data recorded from previous flight training sessions stored in database 114. In an embodiment, flight simulation data stored in the database 114 is manually divided into time-based segments, each segment being is manually assigned a label corresponding to the name of the maneuver executed during that segment. Alternatively, in some embodiments, the time-based segments may be labeled automatically by the flight simulator computer 102. In an embodiment, any particular model of the time-series classifier 110 may be trained to recognize a particular maneuver using only a subset of the collected time-series variables of the flight sessions. Examples of such time-series variable include any of: altitude relative to mean sea level, radio altitude, angle of attack, airspeed, roll angle, pitch angle, gear lever position, flap surface position, flap lever position, heading, fan speed of each engine, thrust lever angle for each engine, wind speed, wind direction, the presence of windshear, ground contact state of each landing gear, and brake pedal forces from both pilots.

Once the models are trained, the time-series classifier 110 receives as input the flight simulation data 150 from flight simulator computer 102 representing, for example, flight variables such as: airspeed, altitude, heading, rate of climb, rate of descent, bank angle, pitch, roll, yaw, application of propulsion system thrust, application of propulsion system power, application of brakes, application of landing gear, application of one or more control surfaces, application of one or more flight control inceptors, application of one or more of flight control devices, aircraft malfunctions, or external environmental conditions.

The trained time-series classifier 110 evaluates the flight simulation data 150 using each of the models to identify specific flight maneuvers occurring at certain time windows, yielding segmented data 170 as output. In other words, the flight session (e.g., flight simulation data 150) is segmented into segmented data 170 based on the identified maneuvers, labeled accordingly, and stored in the database 114. In some embodiments, the time-series classifier 110 receives the flight simulation data 150 from the flight simulator computer 102 in real-time while the flight session is progressing. In such embodiments, the time-series classifier 110 identifies flight maneuvers in real-time as the flight session progresses.

In an embodiment, for each maneuver, the flight simulator computer 102 is trained to recognize, a set of tests that are programmed to assess a pilot's proficiency for that maneuver, and to output the performance metrics data 120 to represent the evaluations criteria that are used to assess a pilot's proficiency for the flight maneuvers. In other words, each maneuver is associated with a unique set of performance metrics and programmed algorithms that are configured to assess how well the pilot performed that maneuver.

Examples of performance metrics for a takeoff maneuver may include evaluations of whether aircraft heading was substantially aligned to the centerline during ground roll; whether forward pitch control was positioned correctly; whether landing gear was raised at an appropriate altitude; and/or whether sufficient airspeed was reached after takeoff. Examples of performance metrics for non-normal procedure such as an emergency descent in response to an aircraft pressurization system failure include evaluations of whether the pilot was able to recognize and respond to the emergency/unanticipated condition within a certain time frame; whether the emergency descent procedure was initiated and executed properly; and/or whether the airspeed was maintained in the proper range during the emergency descent. Examples of performance metrics for a conditional maneuver such as a rejected takeoff where the takeoff maneuver must be aborted, include evaluations of whether the pilot was able to recognize and respond to the emergency/unanticipated condition within a certain time frame; whether the rejected takeoff procedure was initiated and executed properly; and/or whether the amount and timing of brake application was proper. Discussion of how each of the performance metrics is evaluated are discussed next with reference to abnormal detection data 140.

In an embodiment, the adaptive training server 108 is programmed to generate or obtain abnormal detection data 140, defining evaluation criteria used to evaluate the performance metrics, based on analysis of historical flight simulator data representing model flight sessions. Historical flight simulator data may be flight simulator data recorded during prior flight sessions that represent model flight simulation sessions that pilot trainees should strive to mimic. In some embodiments, the evaluation criteria used to evaluate the performance metrics are defined as a set of clusters that identify classes of acceptable and poor performance. The set of clusters may be determined using an unsupervised machine learning algorithm, such as k-means. In some embodiments, the adaptive training server 108 may use a deep neural network trained with historical flight simulator data to classify performance. In an embodiment, historical flight simulator data representing model flight sessions may be obtained from flight sessions conducted by pilot trainees or flight instructors conducting dedicated flights sessions. In some embodiments, the historical flight simulator data is obtained from aircraft flight data recorders, i.e., data from live, non-simulated flight sessions. The historical flight simulator data may be stored in database 114.

The adaptive training server 108 may use clustering algorithms from unsupervised machine learning, such as k-means or Gaussian mixture models, to analyze historical flight simulator data. Based on such analysis, the adaptive training server 108 is programmed to determine evaluation criteria for each of the performance metrics using the abnormal detection data 140. Examples of the evaluation criteria for various performance metrics include the acceptable range of heights above ground at which the landing gear should be raised after liftoff, acceptable range of airspeed that should be reached after liftoff, the acceptable timing period of when the brake should be applied during a rejected takeoff. The defined evaluation criteria may be stored as the abnormal detection data 140. In an embodiment, the performance metrics may be evaluated to output binary results or a set of possible classes, such as: successful or unsuccessful; within norm or outside norm; poor, acceptable, or exceptional; or satisfactory or unsatisfactory. For example, for a takeoff maneuver, the abnormal detection data 140 may define the typical height above ground at which a cluster of qualified pilots raised the landing gear after liftoff, define the airspeed limit (e.g., in accordance to airspace zones), or the amount of deviation the heading could depart from the centerline during ground roll. For another example, for a rejected takeoff, the abnormal detection data 140 may specify a model brake application profile that a pilot's brake application should be measured against.

In some embodiments, the adaptive training server 108 is programmed to generate or obtain abnormal detection data 140 based on airline standard operating procedures (e.g., airline manuals) or industry/regulatory documents that define rules and desired practices for safe aircraft operation. For example, the evaluation criteria may be defined based on airline standard operating procedures, aircraft flight manuals, flight crew operating manuals, pilot operating handbooks, aircraft manufacturer guidance, or equivalent aircraft operational documents that prescribe aircraft operating procedures and operational limits, or regulatory documents.

In an embodiment, the core competency data 130 represents a group of aviation disciplines, or competencies, representing knowledge, skills, and attitudes that are required of aviation pilots. Embodiments may be programmed to generate core competency data based upon practices described in *Manual of Evidence-based Training,* ICAO 9995 (1st Edition, 2016). The core competencies may include one or more of: (1) Application of Procedures; (2) Communications; (3) Aircraft Flight Path Management, Automation; (4) Aircraft Flight Path Management, Manual Control; (5) Leadership And Teamwork; (6) Problem Solving and Decision Making; (7) Situation Awareness; and (8) Workload Management.

The Application of Procedures competency relates to the pilot's ability to identify and apply procedures in accordance with operating instructions and applicable regulations; the Communication competency relates to the pilot's ability to provide effective oral, non-verbal and written communications; the Aircraft Flight Path Management, Automation competency relates to the pilot's ability to control an aircraft flight path through automation; the Aircraft Flight Path Management, Manual Control competency relates to the pilot's ability to control an aircraft flight path through manual control; the Leadership and Teamwork competency relates to the pilot's proficiency in leadership and team working; the Problem Solving and Decision Making competency relates to the pilot's ability to accurately identify risks and resolve problems, using decision-making processes; the Situation Awareness competency relates to the pilot's ability to perceive and comprehend relevant information and to anticipate potential issues; the Workload Management competency relates to the pilot's proficiency in effective resource management (e.g., cockpit resource management) and prioritization of tasks. Some embodiments of this disclosure may include more, or less than, the eight competencies described above. For example, the disclosure herein may also consider a knowledge competency that relates to the sufficiency of knowledge for execute flight maneuvers. The core competencies referred the disclosure may also be referred to as competency indicators.

In an embodiment, the performance metrics that are used to assess a pilot's proficiency of flight maneuvers are also independently used to evaluate the core competencies. In an embodiment, each performance metric is mapped to one or more core competencies based on the knowledge and skill involved with the performance metric and the knowledge and skills associated with the core competencies. For example, the performance metrics for the takeoff maneuver that relates to the evaluation of whether the landing gear was raised at an appropriate height above ground after liftoff may be mapped to the Situational Awareness competency since the flight crew must be perceive the airplane positive vertical speed on the cockpit flight instruments and maintain awareness of the risk of windshear before raising the landing gear lever. As another example, the performance metrics for the rejected takeoff maneuver that relates to whether the pilot was able to recognize and respond to the unanticipated condition within a certain time frame may be mapped to the Situation Awareness competency since this performance metric is evaluating whether the pilot was sufficiently aware of her situation to recognize the unanticipated condition.

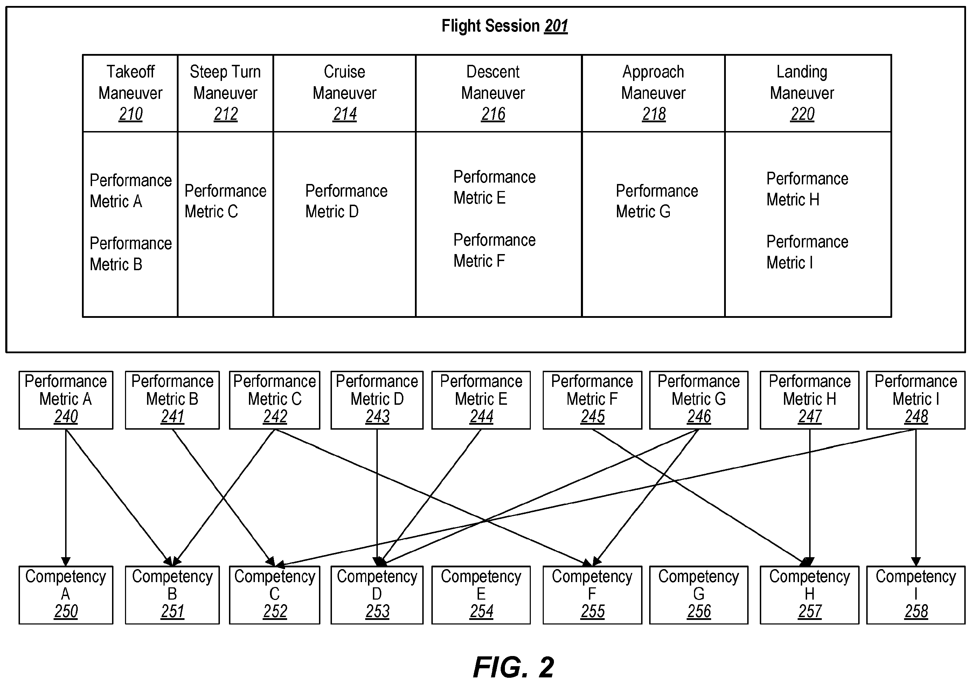

FIG. 2 illustrates a diagram that shows the relationship between the performance metrics, flight maneuvers, and core competencies. FIG. 2 and each other diagram herein is intended as an illustration at the functional level at which skilled persons, in the art to which this disclosure pertains, communicate with one another to describe and implement algorithms using programming. The diagrams are not intended to illustrate every instruction, method object or sub-step that would be needed to program every aspect of a working program, but are provided at the same functional level of illustration that is normally used at the high level of skill in this art to communicate the basis of developing working programs.

In the embodiment of FIG. 2, the adaptive training server 108 is programmed to identify flight maneuvers 210, 212, 214, 216, 218, and 220 from the flight simulation data 150, then to segment the corresponding flight session according to the identified maneuvers. In an embodiment, adaptive training server 108 is programmed to identify performance metrics that are associated with each of the maneuvers: performance metrics A and B are identified for the takeoff maneuver 210; performance metric C is identified for the steep turn maneuver 212; performance metric D is identified for the cruise maneuver 214; performance metrics E and F are identified for the descent maneuver 216; performance metric G is identified for the approach maneuver 218; and performance metrics H and I are identified for the landing maneuver 220. While FIG. 2 illustrates each maneuver being associated with one or two performance metrics, in practice each maneuver could be associated with any number of performance metrics appropriate for assessing the maneuver (e.g., 1-20 or more). Additionally, while FIG. 2 illustrates one instance of each of the flight maneuvers 210, 212, 214, 216, 218, and 220, in some embodiments, some of the flight maneuvers may be performed multiple times during a flight session.

In an embodiment, pilot proficiency for each of the identified maneuvers is assessed automatically under machine control by evaluating the corresponding performance metrics. In an embodiment, the adaptive training server 108 may evaluate each of the performance metrics based the evaluation criteria specified by the abnormal detection data 140. For example, if the performance metric relates to an evaluation of whether the landing gear was raised after liftoff at a height above ground that fits within the range of heights specified by the evaluation criteria, then that performance metric is deemed successful. In an embodiment, the adaptive training server 108 is programmed to use a score-based assessment for determining the pilot's proficiency. In an embodiment, the performance metrics may be weighted, normalized, and summed together to determine the assessment score. For example, to evaluate a takeoff maneuver, the adaptive training server 108 scores the pilot's performance of the maneuver against these a number of performance metrics associated with the maneuver (e.g., a dozen). Each performance metric may be evaluated as a dichotomous assessment (e.g., 0 or 1, pass or fail, normal or anomalous). Then, the results of the dichotomous assessment are inputted into a regression function that maps the results into an overall maneuver proficiency score with a value between zero and one. If, for example, a five-point grading scheme is used, then the maneuver proficiency score can be mapped to the five-point scale by multiplying the proficiency score by 5 and rounding up to the next integer. For example, a maneuver proficiency score of 0.26 would represent a score of 2 out of 5. In an embodiment, the regression function itself is a machine learning model. A weighted linear function of the input performance metrics is used to predict the proficiency score, with the weights tuned using training data collected over many recorded training sessions where qualified flight instructors may have manually evaluated the proficiency of the pilot against each maneuver. In another example, landings would be evaluated in exactly the same way, but the set of performance metrics would be appropriate to landings and the regression model trained on previous manually evaluated landings.

In an embodiment, the performance metrics used to determine a pilot's proficiency for flight maneuvers may also be used to assess the core competencies. As illustrated in FIG. 2, each performance metric of the flight session 210 can be mapped to one or more competencies. Performance metric A 240 is associated with competency A 250 and competency B 251; performance metric B 241 is associated with competency C 252; performance metric C 242 is associated with competency B 251 and competency F 255; performance metric D 243 is associated with competency D 253; performance metric E 244 is associated with competency D 253; performance metric F 245 is associated with competency H 257; performance metric G is associated with competency D 253 and competency F 255; performance metric H is associated with competency H 257; and performance metric I is associated with competency C 252 and competency I 258. In an embodiment, the adaptive training server is programmed to assess each of the competencies based on the corresponding performance metrics, which may have already been evaluated for the flight maneuvers.

In an embodiment, the core competencies are assessed based on a Bayesian inference model, which is a statistical analysis technique used to update the probability of a hypothesis in light of observed evidence (e.g., flight simulation data 150). In this Bayesian inference approach, a mathematical model relates the competency scores to a probability that a particular performance metric will be scored positively (i.e. pass rather than fail, 1 rather than 0). Competency scores may be weighted, normalized, and summed together. At the start of the flight session 201 (or alternatively, after the completion of the flight session but prior to any evaluations), an estimated probability distribution is assigned to each competency. After the pilot in the flight session 201 has executed all maneuvers and adaptive training server 108 has evaluated all performance metrics, the Bayesian inference model is executed based on the evaluated performance metrics to estimate the competency scores. The performance metrics are considered the "observed evidence" and the Bayesian prior probability distributions for the core competencies are updated in light of this observed evidence. In an embodiment, such probability distributions are updated based on a Markov chain Monte Carlo (MCMC) algorithm that randomly samples a posterior probability space for appropriate competency scores that best explain the observed performance metrics. For example, if the pilot's competency B 251 have not been assessed before and thus competency B 251 was provided an estimated probability distribution, favorable evaluation of performance metric A 240 and performance metric C 242 can be used by the Bayesian inference model to update its estimate for competency B 251, updating to a higher value of evaluation. As discussed above, the adaptive training server 108 may collect the flight simulation data in real-time as the flight session progresses, thus, performance metrics corresponding to a particular competency may be performed repeatedly throughout the flight session. Therefore, in an embodiment, the probability distribution of any particular competency, e.g., competency B 251, may be updated multiple times throughout the flight session. The more frequently a particular competency is expressed in any given training session, the more evidence the Bayesian inference model possesses in order to make its assessment about that particular competency score.

In an embodiment, the Bernoulli distribution is used to relate the competency scores to performance metrics. The Bernoulli distribution is a discrete probability distribution that evaluates to 1 with a probability of *p* and to 0 with a probability of *q = 1 - p.* For a given performance metric, the probability that a pilot will score favorably against it is considered a Bernoulli distribution and the value of *p* is given by a weighted, normalized sum of the competencies associated with that performance norm. For example, in the flight session 201, approach maneuver 218 contains performance metric G, which has associated competencies D 253 and F 255. A weighted sum of these competency scores determines the Bernoulli probability that the pilot will score positively on performance metric G. The higher the competency scores D 253 and F 255, the higher the probability of a positive execution of performance metric G. In this embodiment, the weights of the competency scores associated with each performance metric are themselves considered random variables in the Bayesian inference model. By supplying the model with enough performance metric evaluations from the entire training session, the weights themselves are determined using the same Markov chain Monte Carlo approach.

In an embodiment, the adaptive training server 108 may use a supervised machine learning approach to scoring competency. A regression model may be configured to receive performance metrics as input, then the performance metrics may be weighted, normalized, and summer together to produce individual competency scores as output. Examples of regression models used to score competency are linear regression and logistic regression. To train such models to automatically predict scores for the core competencies, each core competency may first be evaluated manually by qualified flight instructors based on flight simulation data from multiple flight sessions. From each of these flight sessions, a qualified flight instructor may provide a score for one or more core competencies by analyzing the automatically assessed performance metrics associated with the flight session. After sufficient amount of manual scoring by qualified flight instructors have been collected (e.g., over multiple flight sessions), the regression model may be trained based on thereof to automatically predict scores for each of the core competencies.

In an embodiment, the adaptive training server 108 may opt out of assessing certain core competencies. Notably, the performance metrics that are evaluated for each flight session depends on the flight maneuvers performed during the flight session. That is, the performance metrics that are evaluated for any one session could differ from another session. It is possible, therefore, that certain competencies may not have any performance metrics associated with them for a given flight session. For example, in the scenario illustrated in FIG. 2, competency E 254 and competency G 256 do not have any associated performance metrics, which means that the adaptive training server 108 may opt out of assessing those competencies due to having insufficient data for the assessment. In some embodiments, even if a competency has one or more associated performance metrics, the adaptive training server 108 may opt out of assessing the competency if it determines that performance metrics that are necessary to assess the competency have not been evaluated for the flight session (e.g., certain flight maneuvers necessary for assessing the competency have not been performed during the flight session).

### 3. FUNCTIONAL OVERVIEW

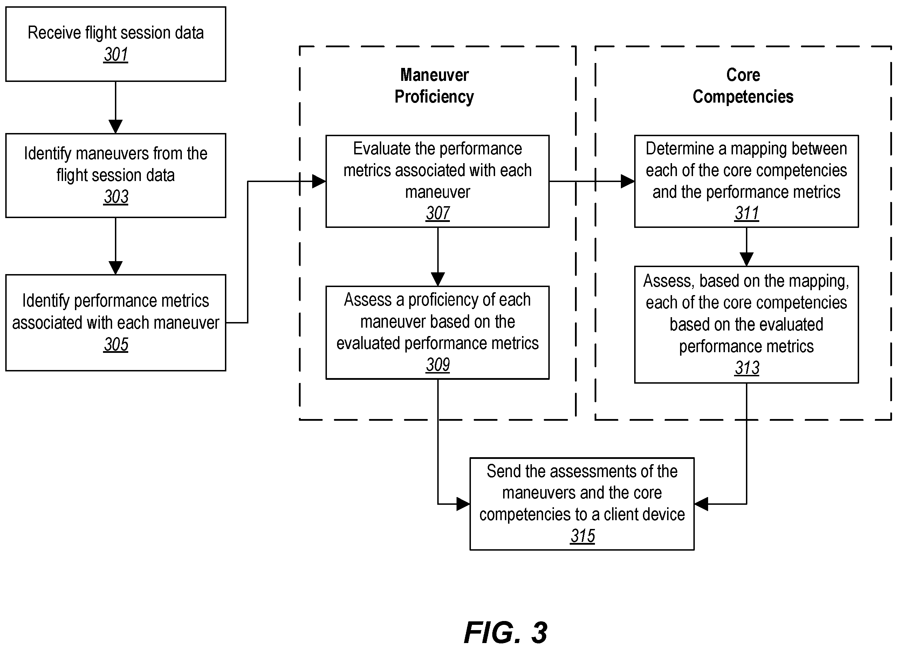

FIG. 3 is a flow diagram of one embodiment of an algorithm that can be programmed to implement the disclosure. FIG. 3 illustrate algorithms for other example processes that may be programmed for use in conjunction with the context of the embodiment illustrated in FIG. 2. In one embodiment, the adaptive training server 108 is programmed to execute the portions of the functions illustrated in FIG. 3.

In an embodiment, the algorithm shown in FIG. 3 begins at block 301 when the adaptive training server 108 receives the flight simulation data 150 corresponding to a flight session from the flight simulator computer 102. In an embodiment, the flight simulation data 150 comprises flight variables such as: airspeed, altitude, heading, rate of climb, rate of descent, bank angle, pitch, roll, yaw, application of propulsion system thrust, application of propulsion system power, application of brakes, application of landing gear, application of one or more control surfaces, application of one or more flight control inceptors, application of one or more of flight control devices, aircraft malfunctions, or external environmental conditions. The flight simulation data 150 may also comprise audio data, video data, and biometric data collected from the pilot and/or the instructor of the flight session. The flight simulation data 150 may also include instructor data 160 that relates to instructor-provided comments, evaluations, or scorings. The flight simulation data 150 may also comprise information indicating unanticipated conditions introduced into the flight session, automatically by the flight simulation computer 102 or manually by the instructor or the pilot.

At block 303, the adaptive training server 108 is programmed to use the time-series classifier to execute a machine learning algorithm to recognize and classify segments of flight simulation data 150 into one of a finite number of classes (e.g., maneuvers). Examples of the flight maneuvers that the time-series classifier 110 is programmed to recognize include takeoff, landing, steep turn, and approach. An example of a flight session segmented based on the various identified flight maneuvers is illustrated in FIG. 2.

Referring back to FIG. 3, at block 305, for each of the flight maneuvers identified from the flight session, the adaptive training server 108 is programmed to identify one or more performance metrics associated with the maneuver. In an embodiment, each flight maneuver is associated with one or more performance metrics that can be used to assess a pilot's proficiency for that maneuver. The same performance metrics could also be used to assess the core competencies of the pilot, as discussed with reference to block 311.

At block 307, the adaptive training server 108 is programmed to evaluate the performance metrics associated with of the maneuvers identified from the flight session. In an embodiment, each of the performance metrics are associated with an evaluation metric defined by the abnormal detection data 140. The evaluation metrics are defined based on an analysis of the historical flight session data collected from past flight sessions that have been determined as being, for example, model sessions that pilot trainees should strive to mimic. Based on such analysis, the adaptive training server 108 determines the evaluation criteria for each of the performance metrics, for example, the height above ground at which the landing gear should be raised after liftoff, threshold airspeed that should be reached after liftoff, the model brake application profile that specifies timing and amount of brake that should be applied during a rejected takeoff. In an embodiment, the adaptive training server 108 may evaluate each of the performance metrics based on the deviation of the pilot's performance in reference to the evaluation criteria. For example, if the pilot's performance with respect to the performance metric is within two standard deviations from the evaluation criteria (e.g., target airspeed, timing of the breaks, etc.), the adaptive training server 108 may evaluate that the performance metric as being successful.

At block 309, the adaptive training server 108 is programmed to assess each of the flight maneuvers based on the evaluated performance metrics. In an embodiments, the adaptive training server 108 may use a score-based assessment to determine the pilot's proficiency of the flight maneuvers. For example, for each of the flight maneuvers, the adaptive training server 108 may compile the corresponding evaluated performance metrics, normalize the evaluations, then determine a score out of a 5-point scale based on thereof.

At block 311, the adaptive training server 108 is programmed to identify a mapping between each of the performance metrics and the core competencies.

At block 313, the adaptive training server 108 is programmed to assess each of the core competencies based on the evaluated performance metrics, for example, based on the mapping information determined at block 311. In an embodiment, the adaptive training server 108 may assess the core competencies prior to, in parallel, or after assessing the proficiency of each of the flight maneuvers. In some embodiments, the adaptive training server may assess the core competencies without assessing the flight maneuvers. In some embodiments, the adaptive training server may assess the flight maneuvers without assessing the core competencies. In an embodiment, the adaptive training server 108 may use a score-based assessment to assess the core competencies. For example, for each core competency that the adaptive training server 108 intends on assessing, the adaptive training server 108 may compile the corresponding evaluated performance metrics, normalize the evaluations, then determine a score out of a 5-point scale based on thereof.

At block 315, the adaptive training server 108 is programmed to send the assessments of the flight maneuvers and the core competencies to a client device. In an embodiment, the client device may be the flight simulator computer 102, another computing device associated with the flight simulation environment, or a cloud computing device detached from the flight simulation environment.

### 4. IMPLEMENTATION EXAMPLE - HARDWARE OVERVIEW

According to one embodiment, the techniques described herein are implemented by at least one computing device. The techniques may be implemented in whole or in part using a combination of at least one server computer and/or other computing devices that are coupled using a network, such as a packet data network. The computing devices may be hard-wired to perform the techniques, or may include digital electronic devices such as at least one application-specific integrated circuit (ASIC) or field programmable gate array (FPGA) that is persistently programmed to perform the techniques, or may include at least one general purpose hardware processor programmed to perform the techniques pursuant to program instructions in firmware, memory, other storage, or a combination. Such computing devices may also combine custom hard-wired logic, ASICs, or FPGAs with custom programming to accomplish the described techniques. The computing devices may be server computers, workstations, personal computers, portable computer systems, handheld devices, mobile computing devices, wearable devices, body mounted or implantable devices, smartphones, smart appliances, internetworking devices, autonomous or semi-autonomous devices such as robots or unmanned ground or aerial vehicles, any other electronic device that incorporates hard-wired and/or program logic to implement the described techniques, one or more virtual computing machines or instances in a data center, and/or a network of server computers and/or personal computers.

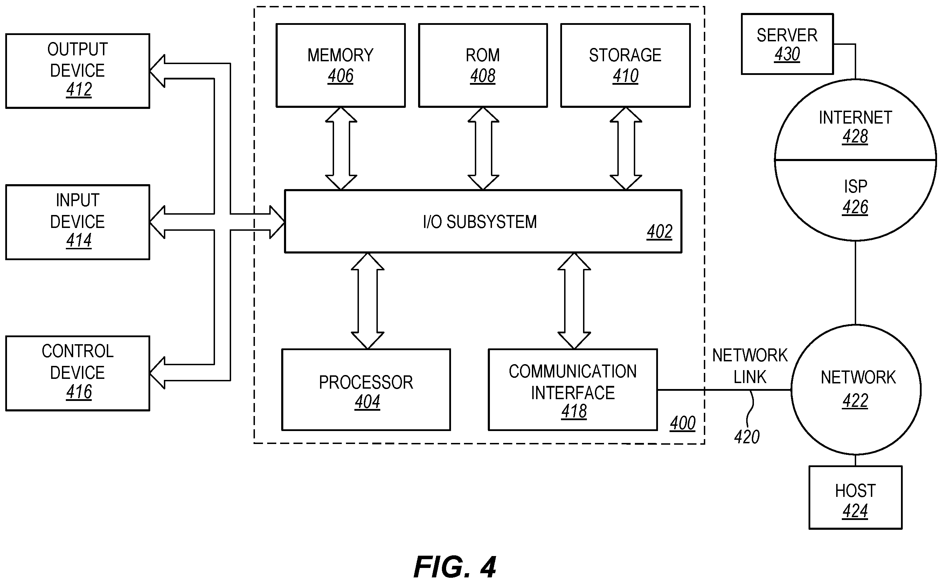

FIG. 4 is a block diagram that illustrates an example computer system with which an embodiment may be implemented. In the example of FIG. 4, a computer system 400 and instructions for implementing the disclosed technologies in hardware, software, or a combination of hardware and software, are represented schematically, for example as boxes and circles, at the same level of detail that is commonly used by persons of ordinary skill in the art to which this disclosure pertains for communicating about computer architecture and computer systems implementations.

Computer system 400 includes an input/output (I/O) subsystem 402 which may include a bus and/or other communication mechanism(s) for communicating information and/or instructions between the components of the computer system 400 over electronic signal paths. The I/O subsystem 402 may include an I/O controller, a memory controller and at least one I/O port. The electronic signal paths are represented schematically in the drawings, for example as lines, unidirectional arrows, or bidirectional arrows.

At least one hardware processor 404 is coupled to I/O subsystem 402 for processing information and instructions. Hardware processor 404 may include, for example, a general-purpose microprocessor or microcontroller and/or a special-purpose microprocessor such as an embedded system or a graphics processing unit (GPU) or a digital signal processor or ARM processor. Processor 404 may comprise an integrated arithmetic logic unit (ALU) or may be coupled to a separate ALU.

Computer system 400 includes one or more units of memory 406, such as a main memory, which is coupled to I/O subsystem 402 for electronically digitally storing data and instructions to be executed by processor 404. Memory 406 may include volatile memory such as various forms of random-access memory (RAM) or other dynamic storage device. Memory 406 also may be used for storing temporary variables or other intermediate information during execution of instructions to be executed by processor 404. Such instructions, when stored in non-transitory computer-readable storage media accessible to processor 404, can render computer system 400 into a special-purpose machine that is customized to perform the operations specified in the instructions.

Computer system 400 further includes non-volatile memory such as read only memory (ROM) 408 or other static storage device coupled to I/O subsystem 402 for storing information and instructions for processor 404. The ROM 408 may include various forms of programmable ROM (PROM) such as erasable PROM (EPROM) or electrically erasable PROM (EEPROM). A unit of persistent storage 410 may include various forms of non-volatile RAM (NVRAM), such as FLASH memory, or solid-state storage, magnetic disk or optical disk such as CD-ROM or DVD-ROM and may be coupled to I/O subsystem 402 for storing information and instructions. Storage 410 is an example of a non-transitory computer-readable medium that may be used to store instructions and data which when executed by the processor 404 cause performing computer-implemented methods to execute the techniques herein.

The instructions in memory 406, ROM 408 or storage 410 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. The instructions may implement a web server, web application server or web client. The instructions may be organized as a presentation layer, application layer and data storage layer such as a relational database system using structured query language (SQL) or no SQL, an object store, a graph database, a flat file system or other data storage.

Computer system 400 may be coupled via I/O subsystem 402 to at least one output device 412. In one embodiment, output device 412 is a digital computer display. Examples of a display that may be used in various embodiments include a touch screen display or a light-emitting diode (LED) display or a liquid crystal display (LCD) or an e-paper display. Computer system 400 may include other type(s) of output devices 412, alternatively or in addition to a display device. Examples of other output devices 412 include printers, ticket printers, plotters, projectors, sound cards or video cards, speakers, buzzers or piezoelectric devices or other audible devices, lamps or LED or LCD indicators, haptic devices, actuators or servos.

At least one input device 414 is coupled to I/O subsystem 402 for communicating signals, data, command selections or gestures to processor 404. Examples of input devices 414 include touch screens, microphones, still and video digital cameras, alphanumeric and other keys, keypads, keyboards, graphics tablets, image scanners, joysticks, clocks, switches, buttons, dials, slides, and/or various types of sensors such as force sensors, motion sensors, heat sensors, accelerometers, gyroscopes, and inertial measurement unit (IMU) sensors and/or various types of transceivers such as wireless, such as cellular or Wi-Fi, radio frequency (RF) or infrared (IR) transceivers and Global Positioning System (GPS) transceivers.

Another type of input device is a control device 416, which may perform cursor control or other automated control functions such as navigation in a graphical interface on a display screen, alternatively or in addition to input functions. Control device 416 may be a touchpad, a mouse, a trackball, or cursor direction keys for communicating direction information and command selections to processor 404 and for controlling cursor movement on display 412. The input device may have at least two degrees of freedom in two axes, a first axis (e.g., x) and a second axis (e.g., y), that allows the device to specify positions in a plane. Another type of input device is a wired, wireless, or optical control device such as a joystick, wand, console, steering wheel, pedal, gearshift mechanism or other type of control device. An input device 414 may include a combination of multiple different input devices, such as a video camera and a depth sensor.

In another embodiment, computer system 400 may comprise an internet of things (IoT) device in which one or more of the output device 412, input device 414, and control device 416 are omitted. Or, in such an embodiment, the input device 414 may comprise one or more cameras, motion detectors, thermometers, microphones, seismic detectors, other sensors or detectors, measurement devices or encoders and the output device 412 may comprise a special-purpose display such as a single-line LED or LCD display, one or more indicators, a display panel, a meter, a valve, a solenoid, an actuator or a servo.

When computer system 400 is a mobile computing device, input device 414 may comprise a global positioning system (GPS) receiver coupled to a GPS module that is capable of triangulating to a plurality of GPS satellites, determining and generating geo-location or position data such as latitude-longitude values for a geophysical location of the computer system 400. Output device 412 may include hardware, software, firmware and interfaces for generating position reporting packets, notifications, pulse or heartbeat signals, or other recurring data transmissions that specify a position of the computer system 400, alone or in combination with other application-specific data, directed toward host 424 or server 430.

Computer system 400 may implement the techniques described herein using customized hard-wired logic, at least one ASIC or FPGA, firmware and/or program instructions or logic which when loaded and used or executed in combination with the computer system causes or programs the computer system to operate as a special-purpose machine. According to one embodiment, the techniques herein are performed by computer system 400 in response to processor 404 executing at least one sequence of at least one instruction contained in main memory 406. Such instructions may be read into main memory 406 from another storage medium, such as storage 410. Execution of the sequences of instructions contained in main memory 406 causes processor 404 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage 410. Volatile media includes dynamic memory, such as memory 406. Common forms of storage media include, for example, a hard disk, solid state drive, flash drive, magnetic data storage medium, any optical or physical data storage medium, memory chip, or the like.

Storage media is distinct from but may be used in conjunction with transmission media. Transmission media participates in transferring information between storage media. For example, transmission media includes coaxial cables, copper wire and fiber optics, including the wires that comprise a bus of I/O subsystem 402. Transmission media can also take the form of acoustic or light waves, such as those generated during radio-wave and infra-red data communications.

Various forms of media may be involved in carrying at least one sequence of at least one instruction to processor 404 for execution. For example, the instructions may initially be carried on a magnetic disk or solid-state drive of a remote computer. The remote computer can load the instructions into its dynamic memory and send the instructions over a communication link such as a fiber optic or coaxial cable or telephone line using a modem. A modem or router local to computer system 400 can receive the data on the communication link and convert the data to a format that can be read by computer system 400. For instance, a receiver such as a radio frequency antenna or an infrared detector can receive the data carried in a wireless or optical signal and appropriate circuitry can provide the data to I/O subsystem 402 such as place the data on a bus. I/O subsystem 402 carries the data to memory 406, from which processor 404 retrieves and executes the instructions. The instructions received by memory 406 may optionally be stored on storage 410 either before or after execution by processor 404.

Computer system 400 also includes a communication interface 418 coupled to bus 402. Communication interface 418 provides a two-way data communication coupling to network link(s) 420 that are directly or indirectly connected to at least one communication networks, such as a network 422 or a public or private cloud on the Internet. For example, communication interface 418 may be an Ethernet networking interface, integrated-services digital network (ISDN) card, cable modem, satellite modem, or a modem to provide a data communication connection to a corresponding type of communications line, for example an Ethernet cable or a metal cable of any kind or a fiber-optic line or a telephone line. Network 422 broadly represents a local area network (LAN), wide-area network (WAN), campus network, internetwork or any combination thereof. Communication interface 418 may comprise a LAN card to provide a data communication connection to a compatible LAN, or a cellular radiotelephone interface that is wired to send or receive cellular data according to cellular radiotelephone wireless networking standards, or a satellite radio interface that is wired to send or receive digital data according to satellite wireless networking standards. In any such implementation, communication interface 418 sends and receives electrical, electromagnetic or optical signals over signal paths that carry digital data streams representing various types of information.

Network link 420 typically provides electrical, electromagnetic, or optical data communication directly or through at least one network to other data devices, using, for example, satellite, cellular, Wi-Fi, or BLUETOOTH technology. For example, network link 420 may provide a connection through a network 422 to a host computer 424.

Furthermore, network link 420 may provide a connection through network 422 or to other computing devices via internetworking devices and/or computers that are operated by an Internet Service Provider (ISP) 426. ISP 426 provides data communication services through a world-wide packet data communication network represented as internet 428. A server computer 430 may be coupled to internet 428. Server 430 broadly represents any computer, data center, virtual machine or virtual computing instance with or without a hypervisor, or computer executing a containerized program system such as DOCKER or KUBERNETES. Server 430 may represent an electronic digital service that is implemented using more than one computer or instance and that is accessed and used by transmitting web services requests, uniform resource locator (URL) strings with parameters in HTTP payloads, API calls, app services calls, or other service calls. Computer system 400 and server 430 may form elements of a distributed computing system that includes other computers, a processing cluster, server farm or other organization of computers that cooperate to perform tasks or execute applications or services. Server 430 may comprise one or more sets of instructions that are organized as modules, methods, objects, functions, routines, or calls. The instructions may be organized as one or more computer programs, operating system services, or application programs including mobile apps. The instructions may comprise an operating system and/or system software; one or more libraries to support multimedia, programming or other functions; data protocol instructions or stacks to implement TCP/IP, HTTP or other communication protocols; file format processing instructions to parse or render files coded using HTML, XML, JPEG, MPEG or PNG; user interface instructions to render or interpret commands for a graphical user interface (GUI), command-line interface or text user interface; application software such as an office suite, internet access applications, design and manufacturing applications, graphics applications, audio applications, software engineering applications, educational applications, games or miscellaneous applications. Server 430 may comprise a web application server that hosts a presentation layer, application layer and data storage layer such as a relational database system using structured query language (SQL) or no SQL, an object store, a graph database, a flat file system or other data storage.

Computer system 400 can send messages and receive data and instructions, including program code, through the network(s), network link 420 and communication interface 418. In the Internet example, a server 430 might transmit a requested code for an application program through Internet 428, ISP 426, local network 422 and communication interface 418. The received code may be executed by processor 404 as it is received, and/or stored in storage 410, or other non-volatile storage for later execution.

The execution of instructions as described in this section may implement a process in the form of an instance of a computer program that is being executed and consisting of program code and its current activity. Depending on the operating system (OS), a process may be made up of multiple threads of execution that execute instructions concurrently. In this context, a computer program is a passive collection of instructions, while a process may be the actual execution of those instructions. Several processes may be associated with the same program; for example, opening up several instances of the same program often means more than one process is being executed. Multitasking may be implemented to allow multiple processes to share processor 404. While each processor 404 or core of the processor executes a single task at a time, computer system 400 may be programmed to implement multitasking to allow each processor to switch between tasks that are being executed without having to wait for each task to finish. In an embodiment, switches may be performed when tasks perform input/output operations, when a task indicates that it can be switched, or on hardware interrupts. Time-sharing may be implemented to allow fast response for interactive user applications by rapidly performing context switches to provide the appearance of concurrent execution of multiple processes simultaneously. In an embodiment, for security and reliability, an operating system may prevent direct communication between independent processes, providing strictly mediated and controlled inter-process communication functionality.

### 5. BENEFITS; IMPROVEMENTS; EXTENSIONS AND ALTERNATIVES

Embodiments allow an adaptive training server to more efficiently process large amount of flight simulation data, in real-time, to provide assessment of pilots' proficiency of flight maneuvers and competency of aviation skills and knowledge.

The embodiments disclose methods and systems that allow the use of one set of evaluated data (e.g., performance metrics) to be used multiple times for different assessments (e.g., proficiency of maneuvers and competencies, aviation skills, and knowledge). For each flight maneuver that a pilot may perform during a flight session, a set of performance metrics that can be used to assess the pilot's proficiency for that maneuver is created. Each performance metric is created to allow it to be evaluated on an objective and data-based standard, allowing the performance metrics to be applicable to multiple assessments (e.g., proficiency of maneuvers and competencies aviation skills and knowledge). This approach departs from existing pilot program that rely heavily on subjective analysis of human instructors. Such existing systems typically rely entirely on the subjective assessment of human instructors, which is problematic because, for example, the scoring practices of various instructors may differ notably, with some instructors tending to grade more harshly while others may be laxer. This divergence can have negative consequences both for the pilot and the training organization. By using objective data-driven metrics, embodiments disclosed herein can deliver more standardized training, thus allowing pilots to experience more consistent and reliable evaluations.

Embodiments further allow for the objective measurement of pilot strengths and weaknesses, which is the basis for a host of derivative technologies for personalized training. By automating the assessment of pilot proficiency and competency, the disclosed methods and systems also permit the pilot the freedom to practice their skills outside the presence of a flight instructor. This especially benefits novice pilots who sometimes train on their own in the flight simulator, though without objective assessments of their proficiency or competency.

Embodiments also allow for the measurement of the effectiveness of training devices. This can be evidenced by the rate of improvement of pilots' proficiency or competency scores over time across multiple training sessions in the device. The current standard in the industry is to default to the training devices with the highest degree of complexity and fidelity, when perhaps simpler training devices could be equally effective. Without objective data on the rate of improvement of pilot proficiency and competency across training devices, the industry would be unable to objectively judge the relative effectiveness of different training devices.

## Claims

1. A computer-implemented method executed using a first computer (108) and comprising:
receiving, from a flight simulator computer (102) that is separate from the first computer (108), over a digital electronic computer network (101), session data (150) indicating flight variables of a flight session occurring on the flight simulator (102) computer in real-time;
**characterized in that** the method further comprises:
inputting the session data (150) into a trained machine learning time-series classifier (110) that has been trained to identify a plurality of maneuvers from the session data (150) including conditional maneuvers in response to emergency, unanticipated, or abnormal conditions that have been introduced into a flight session, and to partition the session data into a plurality of segments (170), each segment corresponding to one of a plurality of maneuvers (210-220) identified from the session data (150), the plurality of maneuvers (210, 212, 214, 216, 218, 220) being associated with a plurality of performance metrics (240-248);
using stored program instructions executed in the first computer (108), evaluating the plurality of performance metrics (240-248) associated with the plurality of maneuvers (210, 212, 214, 216, 218, 220) by, for each of the plurality of maneuvers (210, 212, 214, 216, 218, 220):
identifying one or more of the plurality of performance metrics (240-248) that are associated with the maneuver;
evaluating the identified one or more performance metrics (240-248) associated with the maneuver based on the corresponding segment (170) of the session data (150);
determining a score for the maneuver based on the evaluated one or more performance metrics (240-248) associated with the maneuver, the score indicating a measurement of pilot proficiency for the maneuver;
sending the determined scores of the plurality of maneuvers (210, 212, 214, 216, 218, 220) to a client device that is coupled via the network to the first computer.

2. The method of Claim 1, each of the plurality of performance metrics (240-248) being associated with one or more of a plurality of competency indicators (250-258), the method further comprising:
determining, for each of the plurality of competency indicators (250-258), a score for the competency indicator based on one or more of the evaluated plurality of performance metrics (240-248) that are associated with the competency indicator;
sending, to the client device that is coupled via the network (101) to the first computer (108), the determined scores of the plurality of competency indicators (250-258).

3. The method of Claim 2, the plurality of competency indicators (250-258) being associated with one or more demonstrations of:
an ability to identify and apply procedures in accordance with operating instructions and applicable regulations;
having sufficient knowledge for executing one or more of the plurality of maneuvers;
effective oral, non-verbal and written communications;
an ability to control an aircraft flight path through automation;
an ability to control an aircraft flight path through manual control;
effective leadership and team working;
an ability to accurately identify risks and resolve problems, using decision-making processes;
an ability to perceive and comprehend relevant information and to anticipate potential issues;
effective resource management and prioritization of tasks.

4. The method of Claim 1, the plurality of maneuvers (210, 212, 214, 216, 218, 220) including one or more of: taxi, takeoff, rejected takeoff, departure, transition, climb, cruise, descent, arrival, approach, go-around, missed approach, landing, circuit, steep turn, recovery from stall, recovery from unusual attitude, upset recovery, or autorotation.

5. The method of Claim 1, the flight variables including one or more of: airspeed, altitude, heading, rate of climb, rate of descent, bank angle, pitch, roll, yaw, application of propulsion system thrust, application of propulsion system power, application of brakes, application of landing gear, application of one or more control surfaces, application of one or more flight control inceptors, application of one or more of flight control devices, aircraft malfunctions, or external environmental conditions.

6. The method of Claim **1,** for each of the plurality of maneuvers (210, 212, 214, 216, 218, 220), the evaluating the identified one or more performance metrics (240-248) associated with the maneuver using the corresponding segment (170) of the session data (150) comprising evaluating whether the flight variables indicated by the segment satisfy evaluation criteria specified by abnormal detection data (140).

7. The method of Claim 6, the abnormal detection data (140) having been generated based on a machine learning algorithm trained to determine the evaluation criteria based on one or more of: historical flight simulation data, airline standard operating procedures, aircraft flight manuals, flight crew operating manuals, pilot operating handbooks, aircraft operational documents, or regulatory documents.

8. A non-transitory computer-readable storage medium storing one or more sequences of instructions which when executed using one or more processors of a first computer cause the processors to execute the method of any of claims 1 to 7.

9. A computer system comprising: one or more processors of a first computer and one or more computer-readable non-transitory storage media in communication with the one or more processors, the one or more computer-readable non-transitory storage media comprising instructions that when executed by the one or more processors, cause the system to perform the steps of any of claims 1 to 7.

## Patentansprüche

1. Computerimplementiertes Verfahren, das unter Verwendung eines ersten Computers (108) ausgeführt wird und Folgendes umfasst:
Empfangen von Sitzungsdaten (150), die Flugvariablen einer Flugsitzung, die im Flugsimulatorcomputer (102) stattfindet, in Echtzeit angeben, von einem Flugsimulatorcomputer (102), der vom ersten Computer (108) getrennt ist, über ein digitales elektronisches Computernetz (101);
**dadurch gekennzeichnet, dass** das Verfahren ferner Folgendes umfasst:
Eingeben der Sitzungsdaten (150) in einen trainierten Zeitreihenklassifikator (110) für maschinelles Lernen, der trainiert wurde, mehrere Manöver aus den Sitzungsdaten (150) zu identifizieren, die bedingte Manöver in Reaktion auf Notfall-, unerwartete oder anomale Bedingungen enthalten, die in eine Flugsitzung eingebracht wurden, und die Sitzungsdaten in mehrere Segmente (170) zu unterteilen, wobei jedes Segment einem von mehreren Manövern (210-220) entspricht, die aus den Sitzungsdaten (150) identifiziert wurden, und die mehreren Manöver (210, 212, 214, 216, 218, 220) mehreren Leistungsfähigkeitsmetriken (240-248) zugeordnet sind;
Verwenden gespeicherter Programmbefehle, die im ersten Computer (108) ausgeführt werden und die mehreren Leistungsfähigkeitsmetriken (240-248), die den mehreren Manövern (210, 212, 214, 216, 218, 220) zugeordnet sind, für jedes der mehreren Manöver (210, 212, 214, 216, 218, 220) durch Folgendes bewerten:
Identifizieren von einer oder mehreren der mehreren Leistungsfähigkeitsmetriken (240-248), die dem Manöver zugeordnet sind;
Bewerten der einen oder der mehreren identifizierten Leistungsfähigkeitsmetriken (240-248), die dem Manöver zugeordnet sind, auf der Grundlage des entsprechenden Segments (170) der Sitzungsdaten (150) und
Bestimmen einer Bewertung für das Manöver auf der Grundlage der einen oder der mehreren bewerteten Leistungsfähigkeitsmetriken (240-248), die dem Manöver zugeordnet sind, wobei die Bewertung eine Messung einer Pilotenbefähigung für das Manöver angibt; und
Senden der bestimmten Bewertungen der mehreren Manöver (210, 212, 214, 216, 218, 220) zu einer Client-Vorrichtung, die mittels des Netzes an den ersten Computer gekoppelt ist.

2. Verfahren nach Anspruch 1, wobei jede der mehreren Leistungsfähigkeitsmetriken (240-248) einem oder mehreren von mehreren Befähigungsindikatoren (250-258) zugeordnet ist und das Verfahren ferner Folgendes umfasst:
Bestimmen für jeden der mehreren Befähigungsindikatoren (250-258) einer Bewertung für den Befähigungsindikator auf der Grundlage von einer oder mehreren der bewerteten mehreren Leistungsfähigkeitsmetriken (240-248), die dem Befähigungsindikator zugeordnet sind; und
Senden zu der Client-Vorrichtung, die mittels des Netzes (101) an den ersten Computer (108) gekoppelt ist, der bestimmten Bewertungen der mehreren Befähigungsindikatoren (250-258).

3. Verfahren nach Anspruch 2, wobei die mehreren Befähigungsindikatoren (250-258) einer oder mehreren Darlegungen von Folgendem zugeordnet sind:
einer Fähigkeit, Prozeduren gemäß Betriebsbefehlen und gültigen Regulierungen zu identifizieren und anzuwenden;
eines Besitzens von ausreichendem Wissen zum Ausführen von einem oder mehreren der mehreren Manöver;
effektiver verbaler, nonverbaler und schriftlicher Kommunikation;
einer Fähigkeit, einen Luftfahrzeugflugpfad durch Automatisierung zu steuern;
einer Fähigkeit, einen Luftfahrzeugflugpfad durch manuelle Steuerung zu steuern;
effektiver Führungs- und Mannschaftsarbeit;
einer Fähigkeit, unter Verwendung von Entscheidungsfindungsprozessen Risiken genau zu identifizieren und Probleme zu beheben;
einer Fähigkeit, relevante Informationen wahrzunehmen und zu verstehen und mögliche Problematiken vorauszuschätzen; und
einem effektiven Betriebsmittelmanagement und einer effektiven Priorisierung von Aufgaben.

4. Verfahren nach Anspruch 1, wobei die mehreren Manöver (210, 212, 214, 216, 218, 220) eines oder mehrere der Folgenden umfassen: Rollen, Start, abgelehnter Start, Abflug, Übergang, Steigflug, Reiseflug, Sinkflug, Ankunft, Anflug, Durchstarten, verpasster Anflug, Landen, Kreisen, scharfe Kurve, Wiederherstellung nach einem Strömungsabriss, Wiederherstellung nach einer ungewöhnlichen Lage, Störfallwiederherstellung oder Autorotation.

5. Verfahren nach Anspruch 1, wobei die Flugvariablen eine oder mehrere der Folgenden enthalten: Fluggeschwindigkeit, Höhe, Kurs, Steigrate, Sinkrate, Querneigungswinkel, Nicken, Rollen, Gieren, Vortriebssystemschubeinsatz, Vortriebssystemleistungseinsatz, Bremseneinsatz, Fahrwerkseinsatz, Einsatz einer oder mehrerer Leitflächen, Einsatz eines oder mehrerer Flugsteuerungsorgane, Einsatz einer oder mehrerer Flugsteuervorrichtungen, Luftfahrzeugfehlfunktionen oder Außenumgebungsbedingungen.

6. Verfahren nach Anspruch 1, wobei für jedes der mehreren Manöver (210, 212, 214, 216, 218, 220) das Bewerten der einen oder der mehreren identifizierten Leistungsfähigkeitsmetriken (240-248), die dem Manöver zugeordnet sind, unter Verwendung des entsprechenden Segments (170) der Sitzungsdaten (150) ein Bewerten umfasst, ob die Flugvariablen, die durch das Segment angegeben werden, Bewertungskriterien erfüllen, die durch anomale Detektionsdaten (140) festgelegt werden.

7. Verfahren nach Anspruch 6, wobei die anomalen Detektionsdaten (140) auf der Grundlage eines Algorithmus für maschinelles Lernen erzeugt wurden, der trainiert ist, die Bewertungskriterien auf der Grundlage von einem oder mehreren der Folgenden zu bestimmen: historischen Flugsimulationsdaten, Fluggesellschaftnormalbetriebsprozeduren, Luftfahrzeugfluganleitungen, Flugbesatzungsbetriebsanleitungen, Pilotenhandbüchern, Luftfahrzeugbetriebsdokumenten oder Regulierungsdokumenten.

8. Nicht transitorisches computerlesbares Speichermedium, das eine oder mehrere Abfolgen von Befehlen speichert, die, wenn sie unter Verwendung von einem oder mehreren Prozessoren eines ersten Computers ausgeführt werden, verursachen, dass die Prozessoren das Verfahren nach einem der Ansprüche 1 bis 7 ausführen.

9. Computersystem, das Folgendes umfasst: einen oder mehrere Prozessoren eines ersten Computers und ein oder mehrere computerlesbare nicht transitorische Speichermedien in Kommunikation mit dem einen oder den mehreren Prozessoren, wobei das eine oder die mehreren computerlesbaren nicht transitorischen Speichermedien Befehle umfassen, die, wenn sie durch den einen oder die mehreren Prozessoren ausgeführt werden, verursachen, dass das System die Schritte nach einem der Ansprüche 1 bis 7 durchführt.

## Revendications

1. Procédé mis en œuvre par ordinateur exécuté à l'aide d'un premier ordinateur (108) et comprenant:
la réception, à partir d'un ordinateur de simulateur de vol (102) qui est séparé du premier ordinateur (108), sur un réseau informatique électronique numérique (101), de données de session (150) indiquant des variables de vol d'une session de vol se déroulant sur l'ordinateur de simulateur de vol (102) en temps réel;
**caractérisé en ce que** le procédé comprend en outre:
la saisie des données de session (150) dans un classificateur de séries chronologiques d'apprentissage automatique entraîné (110) qui a été entraîné pour identifier une pluralité de manœuvres à partir des données de session (150) incluant des manœuvres conditionnelles en réponse à des conditions d'urgence, imprévues, ou anormales qui ont été introduites dans une session de vol, et pour partitionner les données de session en une pluralité de segments (170), chaque segment correspondant à une d'une pluralité de manœuvres (210-220) identifiées à partir des données de session (150), la pluralité de manœuvres (210, 212, 214, 216, 218, 220) étant associée à une pluralité de métriques de performance (240-248);
à l'aide d'instructions de programme stockées exécutées dans le premier ordinateur (108), l'évaluation de la pluralité de métriques de performance (240-248) associée à la pluralité de manœuvres (210, 212, 214, 216, 218, 220) par, pour chacune de la pluralité de manœuvres (210, 212, 214, 216, 218, 220):
l'identification d'une ou plusieurs de la pluralité de métriques de performance (240-248) qui sont associées à la manœuvre;
l'évaluation de l'une o plusieurs métriques de performance (240-248) identifiées associées à la manœuvre sur la base du segment (170) correspondant des données de session (150);
la détermination d'un score pour la manœuvre sur la base de l'une ou plusieurs métriques de performance (240-248) évaluées associées à la manœuvre, le score indiquant une mesure de la maîtrise du pilote pour la manœuvre;
l'envoi des scores déterminés de la pluralité de manœuvres (210, 212, 214, 216, 218, 220) à un dispositif client qui est couplé par le réseau au premier ordinateur.

2. Procédé selon la revendication 1, chacune de la pluralité de métriques de performance (240-248) étant associée à un ou plusieurs d'une pluralité d'indicateurs de compétence (250-258), le procédé comprenant en outre:
la détermination, pour chacun de la pluralité d'indicateurs de compétence (250-258), d'un score pour l'indicateur de compétence sur la base d'une ou plusieurs de la pluralité de métriques de performance (240-248) évaluées qui sont associées à l'indicateur de compétence;
l'envoi, au dispositif client qui est couplé par le réseau (101) au premier ordinateur (108), des scores déterminés de la pluralité d'indicateurs de compétence (250-258).

3. Procédé selon la revendication 2, la pluralité d'indicateurs de compétence (250-258) étant associée à une ou plusieurs démonstrations concernant:
une capacité d'identifier et d'appliquer des procédures conformément à des instructions opérationnelles et réglementations applicables;
le fait d'avoir une connaissance suffisante pour exécuter une ou plusieurs de la pluralité de manœuvres;
des communications orales, non verbales et écrites efficaces;
une capacité de commander la trajectoire de vol d'un aéronef par automation;
une capacité de commander la trajectoire de vol d'un aéronef par commande manuelle;
un leadership et un travail d'équipe efficaces;
une capacité d'identifier les risques et de résoudre les problèmes avec précision, à l'aide de processus de prise de décision;
une capacité de percevoir et comprendre les informations pertinentes et d'anticiper les problèmes potentiels;
une gestion des ressources et une priorisation des tâches efficaces.

4. Procédé selon la revendication 1, la pluralité de manœuvres (210, 212, 214, 216, 218, 220) incluant un ou plusieurs parmi: roulage, décollage, décollage interrompu, départ, transition, montée, croisière, descente, arrivée, approche, remise des gaz, approche interrompue, atterrissage, faire des tournées, virage serré, sortie de décrochage, sortie d'assiette anormale, rétablissement, ou autorotation.

5. Procédé selon la revendication 1, les variables de vol incluant un ou plusieurs parmi: vitesse-air, altitude, cap, taux de montée, taux de descente, angle d'inclinaison, tangage, roulis, lacet, application de la poussée du système de propulsion, application de la puissance du système de propulsion, application des freins, application du train d'atterrissage, application d'une ou plusieurs surfaces de commande, application d'une ou plusieurs unités de commande de vol, application d'un ou plusieurs dispositifs de commande de vol, dysfonctionnements de l'aéronef, ou conditions environnementales externes.

6. Procédé selon la revendication 1, pour chacune de la pluralité de manœuvres (210, 212, 214, 216, 218, 220), l'évaluation de l'une ou plusieurs métriques de performance (240-248) identifiées associées à la manœuvre à l'aide du segment (170) correspondant des données de session (150) comprenant l'évaluation du fait que les variables de vol indiquées par le segment respectent les critères d'évaluation spécifiés par des données de détection anormale (140).

7. Procédé selon la revendication 6, les données de détection anormale (140) ayant été générées sur la base d'un algorithme d'apprentissage automatique entraîné pour déterminer les critères d'évaluation sur la base d'un ou plusieurs parmi: données historiques de simulation de vol, procédures opérationnelles standard des compagnies aériennes, manuels de vol des aéronefs, manuels d'exploitation des équipages de conduite, guides d'utilisation des pilotes, documents opérationnels des aéronefs, ou documents réglementaires.

8. Support de stockage non transitoire lisible par ordinateur stockant une ou plusieurs séquences d'instructions qui, lorsque elles sont exécutées à l'aide d'un ou plusieurs processeurs d'un premier ordinateur, font en sorte que les processeurs exécutent le procédé selon l'une quelconque des revendications 1 à 7.

9. Système informatique comprenant: un ou plusieurs processeurs d'un premier ordinateur et un ou plusieurs supports de stockage non transitoires lisibles par ordinateur en communication avec l'un ou plusieurs processeurs, l'un ou plusieurs supports de stockage non transitoires lisibles par ordinateur comprenant des instructions qui, lorsque elles sont exécutées par l'un ou plusieurs processeurs, font en sorte que le système exécute les étapes selon l'une quelconque des revendications 1 à 7.
